(19)

Europäisches
Patentamt
European
Patent Office
Office européen
des brevets

(11) **EP 1 901 150 B1**

(12) **EUROPEAN PATENT SPECIFICATION**

(45) Date of publication and mention
of the grant of the patent:
**29.10.2008 Bulletin 2008/44**

(51) Int Cl.:
***G05B 19/4061*** *(2006.01)*     ***B25J 9/16*** *(2006.01)*

(21) Application number: **06120615.7**

(22) Date of filing: **14.09.2006**

(54) **A method and device for avoiding collisions between an industrial robot and an object**

Verfahren und Vorrichtung zur Vermeidung von Kollisionen zwischen einem Industrieroboter und einem Objekt

Procédé et dispositif permettant d'éviter les collisions entre un robot industriel et un objet

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**19.03.2008 Bulletin 2008/12**

(73) Proprietor: **ABB Research Ltd.**
**8050 Zürich (CH)**

(72) Inventor: **Strandberg, Morten**
**722 28 Västerås (SE)**

(74) Representative: **Reyier, Ann-Mari et al**
**Bjerkéns Patentbyra KB**
**Box 128**
**721 05 Västeras (SE)**

(56) References cited:
**EP-A- 1 366 867**          **EP-A2- 0 743 579**
**US-A1- 6 166 504**

- **KARA A ET AL: "Intelligent control of a robotic aid system for the physically disabled"** PROCEEDINGS OF THE INTERNATIONAL SYMPOSIUM ON INTELLIGENT CONTROL. ARLINGTON, AUG. 13 -15, 1991, NEW YORK, IEEE, US, 13 August 1991 (1991-08-13), pages 359-364, XP010048659 ISBN: 0-7803-0106-4
- **FREUND E ET AL: "EIN ALGORITHMS ZUR KOLLISIONSERKUNNUNG UND -VERMEIDUNG BEI ROBOTERNMIT ZYLINDERFORMIGEM ARBEITSRAUM" ROBOTERSYSTEME,** SPRINGER VERLAG. BERLIN, DE, vol. 6, no. 1, 1 March 1990 (1990-03-01), pages 1-10, XP000104118
- **BERGEN VAN DEN G: "A FAST AND ROBUST GJK IMPLEMENTATION FOR COLLISION DETECTION OF CONVEX OBJECTS" JOURNAL OF GRAPHICS TOOLS, ASSOCIATION FOR COMPUTING MACHINERY, NEW YORK, US, vol. 4, no. 2, 1999, pages 7-25, XP001024748 ISSN: 1086-7651**

## Description

FIELD OF THE INVENTION

The present invention relates to a method and a device for avoiding collisions between components of a multi-axial industrial robot and at least one other object.

PRIOR ART

A problem in connection with industrial robots is how to prevent collisions between the robot and objects belonging to the same work cell as the robot. An object can be a physical part or an assembly of parts constituting a solid. Different types of objects may co-exist in the robot work cell. The object can either be moving or stationary. Moving objects are, for example, mechanical units such as robots, external axes of the robot, and positioners. Examples of stationary objects are rotation table, fixtures, and maintenance equipment. Collisions in a robot work cell may occur either between moving objects or between a moving object and a stationary object.

Interferences due to proximity of objects in the work cell or intersecting trajectories need to be avoided. Relatively high speed used during production phase could otherwise result in severe damage to the work cell objects and downtime in production if a collision were to happen. The trajectories of moving objects in a robot work cell are often well known in advance. However, trajectories of moving objects in work cells can not always be known exactly in advance, most often as a result of nondeterministic processes, such as spot welding or the of use of sensor data. Path changes may then occur either due to unpredictable delays of the process or sensor corrections of robot trajectories. Unpredicted path changes may also occur as a result of drifts. Various programming errors can also lead to collisions. Even though modified robot programs may appear collision-free, collisions may still occur later in the production phase due to errors that did not manifest themselves earlier.

The permanent demand on higher production capacities at lower cost has further led to the development of new automation concepts based on multi-robot systems. Despite efforts from robots manufacturers to design easy-to-use multi-robot solutions, the numerous degrees of freedom enabled by such systems have been accompanied by an increased risk of collisions.

Over the past twenty years several approaches based on different technologies and concepts have been proposed to prevent collisions between objects belonging to the same robot work cell. US6 212 444, for example, proposes to set a common area in which an operating area of a robot and an operating area of an apparatus, such as another multi-axial robot performing an operation cooperatively with the robot, overlap each other. A first entrance-forbidding signal is output to the apparatus forbidding the apparatus to enter the common area when a predetermined reference point on the robot is within the common area, and a second entrance forbidding signal is output to the robot forbidding the reference point of the robot to enter the common area when the movable part of the apparatus is within the common area. According to the disclosed method, the other moving object is forbidden to enter the common area if a predetermined reference point, usually located at the tip of the mechanical arm of the robot or at a joint, is within the common area. Reciprocally, according to the disclosed method, a reference point on the robot is forbidden to enter the common area if the other moving object is within the common area.

It has also been proposed to use protective zones enclosing the moving objects or parts of the objects. For example, the protective zones surround the mechanical arms of the robot and/or its tool. Protective zones are, for example, described in the following patent documents: US2005/0090930, JP2003-334777, and JP08-141978. US2005/0090930 describes a method where bounding boxes of various geometrical shapes are attached around parts of objects possibly to cover their whole bodies. Interferences between the boxes are checked by an algorithm, which judges whether the boxes overlap. In JP2003-334777 protective envelops are used to model bodies of moving objects, whose positions are recorded together with their closest inter-distance at said positions, as well as size extensions of the envelops of the moving objects as functions of their speed. An interpolation of the recorded distances together with at least one predicted distance is accomplished and the minimum of the obtained interpolation curve is compared with the sum of the thicknesses of the envelops of the objects of concern. In JP08-141978 is described a method where a double protective envelop is used around robot tools.

US6678582 describes a method for collision avoidance between a manipulator and at least one other object. The method comprises: calculating a stopping time for the robot on the basis of actual and past joint positions of a multi-axial robot and velocities and accelerations of each robot joint, forecasting a configuration of a trajectory of the components of the robot at the stopping time, checking the predicted configuration through distance/interference algorithms for interference of the robot components with components of the other object, and stopping the robot and/or the other object in case a collision is imminent. The stopping time is the time it will take to stop the robot from the present state of the robot. Predicted configurations are determined at the estimated stopping time. It is assumed that the robot continues to move with its present acceleration, from its present velocity and position. A shortcoming with the disclosed method is that large errors may arise in the predicted configurations, as they are only based on past and present joint positions, velocities and accelerations. For example, if the robot drastically changes its moving direction, there will be a large error in the predicted configuration of the robot. Assuming that predicted configurations of several multi-axial robots at their respective stopping time are checked between each other, collisions between the robots could still occur since their predicted configurations are only based on past and present parameters. This brings about that large margins have to be used in order to avoid collisions between the robots.

OBJECTS AND SUMMARY OF THE INVENTION

The object of the present invention is to provide an alternative to existing methods and devices for avoiding collisions, which provides a possibility to improve the prediction of future collisions and thereby reducing the margins necessary for avoiding collisions.

According to one aspect of the invention this object is achieved by a method as defined in claim 1.

An advantage of this approach is that a longer look-ahead time is achieved, which enables an earlier detection of a risk of collision and thus an improved estimation of when the robot should be stopped. A longer look-ahead time enhances the chance to detect imminent collisions and provides more time to decide what to do to prevent the collision and to stop the robot before the collision occurs. Another advantage achieved with the invention is that the margins necessary for avoiding collisions can be reduced.

According to an embodiment of the invention, the method comprises calculating the shortest distances between the components of the robot and the object at a plurality of future points in time and, on the basis thereof, estimating the time left until a collision occurs between the robot and the object.

According to an embodiment of the invention, the method further comprises receiving information, such as information on future joint angles and information on a planned path for the robot. Said shortest distances between the components of the robot and the object are determined based on the planned robot path. Generally, a control system of an industrial robot includes a path planner, which plans the path of the robot. The path planner is adapted to receive movement instructions from an application program and, on the basis thereof, determine how the robot should move in order to execute the movement instruction. The path planner plans how the instructed movement should be performed by carrying out an interpolation of the movement. The interpolation includes dividing the instructed movement into a plurality of small increments, and computing the joint angles for all axes of the robot for each increment. The joint angles are then converted into motor references. The path planner transmits the computed motor references to drive modules of the robot.

The path of the robot is planned a specified time interval ahead of the current position of the robot. According to this embodiment, information on the future path, i.e. the actual planned path, of the robot is used to calculate the time left until collision. This information is already available in the path planner unit of the robot control system. Collisions are detected based on the programmed path. Thus, the actual planned path is used in order to predict whether a collision is imminent, instead of an estimated path calculated based on past movements, as in the prior art. This embodiment improves the accuracy of the estimation of whether a collision is imminent or not.

According to an embodiment of the invention, the future points in time are consecutively selected during a defined look-ahead time interval. The look-ahead time interval depends on how far ahead the path is planned, i.e. the look-ahead time of the path planner, which depends on the control system of the robot.

According to an embodiment of the invention, the method comprises performing an extrapolation of the stored shortest distances, until the distance between the robot and the object becomes zero, and on the basis thereof determining the time left until a collision between the robot and the object. The shortest distances, calculated based on the information from the path planner, form a shortest distance curve. The shortest distances curve is extrapolated using the calculated shortest distances at different future times. The extrapolated part of the curve is used to calculate the time left until collision. The look-ahead time then becomes the sum of the look-ahead time of the path planner and the extrapolated part of the curve. This embodiment further increases the look-ahead time and thus further enhances the chance to detect imminent collisions and provides more time to stop the robot before a collision occurs.

According to an embodiment of the invention, the method comprises: defining one or more protective zones attached to and enclosing the components of the robot, defining one or more protective zones attached to and enclosing the object, calculating the shortest distance between the zone(s) of the robot and the zone(s) of the object at a plurality of future points in time, and based thereon estimating the time left until a collision occurs between the zones. A protective zone is defined as a volume of an arbitrary or predefined geometry enclosing the whole or a part of the object/robot, which is to be protected from collisions. For example, protective zones may surround the mechanical arms of the robot, the tool, or the workpiece carried by the robot. The protective zones are attached to the moving object, which means that they follow the movement of the object. This embodiment detects imminent collisions between predefined zones of the robot and the other object. The protective zones can be one, two or three-dimensional and have an arbitrary shape.

According to an embodiment of the invention, the method comprises: defining at least two protective zones enclosing the components of the robot, calculating the shortest distance between the zones of the robot at a plurality of future points in time, and based thereon estimating the time left until a collision occurs between the zones of the robot. This embodiment enables detection of imminent collisions between predefined zones enclosing components of the robot. For example, this embodiment makes it possible to detect imminent collisions between a tool, or a work object carried by the robot and other parts such as arms of the robot. This embodiment is particularly advantageous if the robot carries a large work object, such as a car body side, and there is a risk that the work object comes into collision with the robot itself.

According to an embodiment of the invention, said other object is a multi-axial industrial robot and the method comprises: defining at least two protective zones enclosing the components of the first multi-axial robot, defining at least two protective zones enclosing the components of the second multi-axial robot, forming pairs of zones consisting of one zone of the first robot and one zone of the second robot, calculating, for each pair of zones, the shortest distance between the zones at a plurality of future points in time, and storing the calculated shortest distances in a buffer for each pair of zones, and based thereon estimating the time left until a collision occurs between the zones. This embodiment enables detection of imminent collisions between predefined zones enclosing different parts of two multi-axial industrial robots.

According to an embodiment of the invention, the method further comprises calculating a shortest distance between the components of the robot and the object, determining whether the calculated shortest distance is smaller than a threshold value and in that case estimating the time left until collision occurs, otherwise no estimation of the time left until collision is done. A collision is only forthcoming if the distance between the robot and the object is decreasing, and as long as the distances between them are large enough there is no risk of an imminent collision. According to this embodiment, the time left until collision is only estimated if the shortest distance between the components of the robot and the object is shorter than a threshold value. Hence, needless computation is avoided and processor load is decreased.

According to an embodiment of the invention, the robot or the object is stopped in case the estimated time left until collision is shorter than the stopping time multiplied by a safety factor set by the user. According to the invention, the robot and/or the object shall be ordered to stop in case the estimated time left until collision is close to the stopping time for the robot. If the robot is ordered to stop when the time left until collision is equal to the stopping time, there is a risk, due to calculation errors, that a collision will occur before the robot is stopped. Hence, to ensure that there is enough time to stop the robot, the time left until collision should be larger than the stopping time. According to this embodiment, the robot is ordered to stop in case the estimated time left until collision is shorter than the stopping time multiplied by a safety factor. If the safety factor is given a value larger than one, the safety factor provides a safety margin for stopping the robot. This embodiment enables the user to set the safety factor and thus to determine the safety margin for stopping the robot. However, in some situations it can be useful to give the safety factor a value smaller than one, for instance, when two robot trajectories presenting a low risk of collision have to be programmed in the vicinity of each other. In case the safety factor is set at a value below one, the collision avoidance detection for that pair of zones is turned off. Alternatively, the collision avoidance system can be temporarily turned off for a given pair of zones and then turned on again later with the help of robot command instructions.

According to an embodiment of the invention, the method further comprises calculating a shortest distance between the components of the robot and the object, determining whether the calculated shortest distance is smaller than a defined minimum value and in case the shortest distance is smaller than the minimum value reducing the speed of the robot by a given percentage. A reduction of the speed of the robot results in a reduction of the stopping time of the robot, and thus the robot is permitted to come closer to the object until the collision avoidance system stops the robot. This embodiment also reduces the risk for false alarms from the collision avoidance system and thereby avoids unnecessary stops of the robot.

It is easy to realize that the method according to the invention, as defined in the appended set of method claims, is suitable for execution by a computer program having instructions corresponding to the steps in the inventive method when run on a processor unit.

According to a further aspect of the invention, the object is achieved by a computer program product directly loadable into the internal memory of a computer or a processor, comprising software code portions for performing the steps of the method according to the appended set of method claims, when the program is run on a computer. The computer program is provided either on a computer-readable medium or through a network.

According to another aspect of the invention, the object is achieved by a computer readable medium having a program recorded thereon, when the program is to make a computer perform the steps of the method according to the appended set of method claims, and the program is run on the computer.

According to another aspect of the invention this object is achieved by a device as defined in claim 12.

Further developments of the device are characterized by the features of the additional claims.

BRIEF DESCRIPTION OF THE DRAWINGS

The invention will now be explained more closely by the description of different embodiments of the invention and with reference to the appended figures.

Fig. 1    shows an example of a robot work cell including two multi-axial robots and a device for avoiding collisions according to an embodiment of the invention.

Fig. 2     shows a planned robot path.

Fig. 3     shows a shortest-distance curve for a pair of zones and illustrates how the time left until collision is calculated according to an embodiment of the invention.

Fig. 4     shows flow diagram of a method for avoiding collisions according to an embodiment of the invention.

DETAILED DESCRIPTION OF PREFERRED EMBODIMENTS OF THE INVENTION

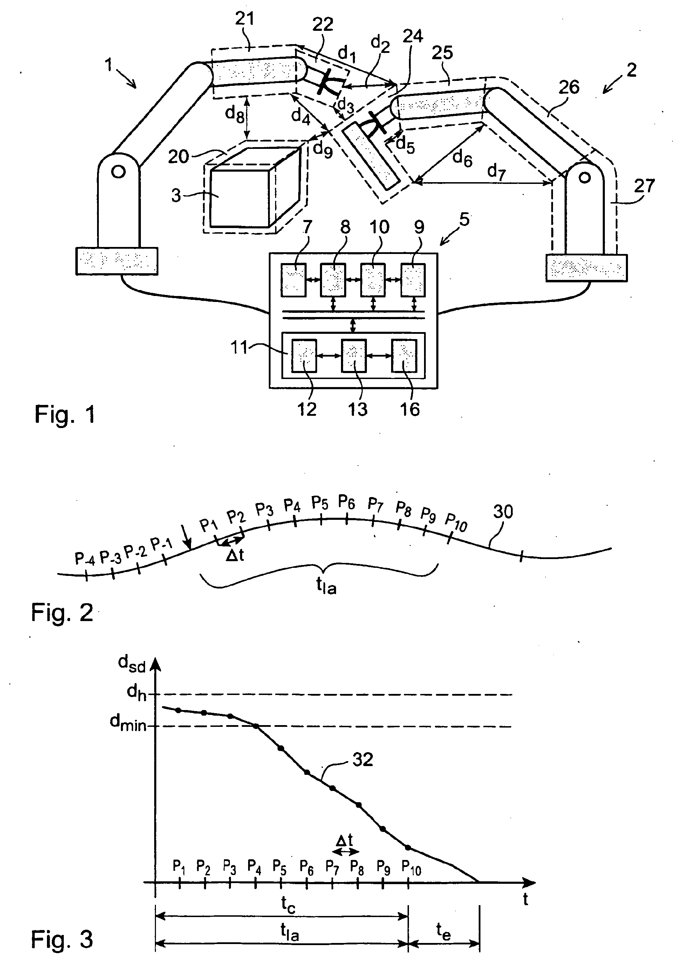

The invention will in the following be described in connection to a work cell including two multi-axial robots 1,2 and a stationary object 3, as shown in figure 1. However, the collision avoidance device and method according to the invention can be used for any work cell including two or more objects, such as any combination of multi-axial robots, stationary or movable objects. A work cell may include one or more multi-axial robots. Further, a work cell may include one or more stationary or moving objects.

The robots 1,2 are connected to a common control unit 5. The control unit 5 is, for example, a conventional robot control system including necessary hardware, such as one or more processor units, memory means, and input and output means, and software for carrying out normal robot control tasks. The control unit comprises program storage 7 for storing applications programs comprising program instructions written in a robot language, a program executor 8 adapted to execute the stored application programs, and a path planner unit 9 adapted to receive instructions from the program executor 8 and on the basis thereof determine how the robot or robots should move in order to execute movement instructions of the application program. In this embodiment the control unit 5 includes a path planner entity 9 which can plan the path in synchronized or independent motion for both robots 1, 2 based respectively on separate application programs including linked movement instructions between both robots or separate application programs excluding such instructions for each robot. The control unit 5 also comprises a stop unit 10 adapted to stop the robot or the robots upon order.

In this embodiment of the invention, a collision avoidance unit 11, which monitors collisions between the robots 1, 2 and the object 3 in the work cell, is located in the control unit 5. The collision avoidance unit 11 comprises a buffer unit 12 including a plurality of buffers for storing computed shorter distances between objects in the work cell, a computation unit 13 adapted to estimate the time left until a collision occurs between the objects and to compute stopping times for the robots, and to compare the estimated time left until collision and the stopping time for the robots. The collision avoidance unit 11 is adapted to send a stop order to the stop unit 10 in case the estimated time left until collision is close to the stopping time of the robot. The computation unit 13 monitors the robot 1,2 in order to detect whether a collision between the robot and the other objects in the work cell is imminent, and if a collision is imminent the computation unit generates an order to stop one of the robots, or both robots, which order is forwarded to the stop unit 10. When the stop unit 10 receives the stop order from the computation unit 13, the robot or both the robots are braked until their movements are stopped. Preferably, the robots are kept on their path during the braking.

Alternatively, the collision avoidance unit 11 can be made as a separate hardware unit adapted to receive instructions from the path planner units of the robots 1, 2. This is particularly advantageous in a robot system where the robots are provided with individual control units with separate path planner units. In such an embodiment, the collision avoidance unit 11 receives information on the planned path from the separate path planner units and communicates the stop order(s) to the robot control unit(s) concerned in order to avoid a collision.

Alternatively, it is also possible to use an already existing safety system, for instance a PLC, in order to stop or brake the robot. In this case the stop signal from the computer unit 13 is communicated to the safety system.

The collision avoidance unit 11 further comprises a memory 16 for storing data rendered by defining protective zones attached to and enclosing the objects in the work cell. One or more protective zones can be defined for each object. For example, one protective zone 20 is defined for the stationary object 3 in figure 1, two protective zones 21, 22 are defined for the robot 1, and four protective zones 24 - 27 are defined for the robot 2. A protective zone may enclose one or more components of the robot, for example as for robot 2 in figure 1, one protective zone may enclose each arm of the robot. A tool or a work object carried by the robot may be enclosed by its own protected zone. Zones are defined as volumes of arbitrary geometries. The volumes can range from simple geometric primitives, such as cylinders, spheres and boxes, to more general representations such as complex polyhedra and triangulated surface patches. Stationary objects and shared workspace areas may simply be enclosed in geometrical volumes. An object may be enclosed by a model of its whole body, a model of its surface, by virtual walls or by points only. For example, simple CAD models of objects can be loaded into the robot control unit and be used as protective zones around objects.

The computation unit 13 is adapted to calculate the shortest distances between the protective zones of the objects of the work cell at a plurality of future points in time and on the basis thereof estimating the time left until a collision occurs between the protective zones in the work cell. The shortest distance is, for example, calculated by means of the well known Gilbert Johnsson Keerthi (GJK) algorithm. Preferably, for each protective zone 20-27, the shortest distances $d_1$-$d_9$ (not all distances are shown in the figure) to all the other protective zones in the work cell are calculated, possibly also the shortest distances between protective zones enclosing the same robot. As shown in the figure 1, robot 2 carries a large and extensive work object, surrounded by the protective zone 24, which may come into a collision with the other components of the robot, surrounded by the zones 25-27. In order to avoid collisions between the work object and other components of the robot the shortest distances $d_5$-$d_7$ between zone 24, enclosing the work object, and the zones 25-27, enclosing the other components of the robot are calculated.

The zones 21, 22, 24 - 27 are movable zones, and the zone 20 is a stationary one. All possible pairs of zones in the work cell are determined. For example, if the work cell includes four protective zones, the number of possible pair of zones is six. In the example shown in figure 1, the work cell includes seven protective zones and accordingly there are 21 possible pairs of zones. Each pair of zones is provided with its own buffer for storing the consecutive values of the shortest distances between the pair of zones. For each zone there exists a description file that contains information about the type, shape, dimensions, orientation, possible attachment of the zone to the object including the reference coordinate system for the attachment of the zone to the object and a geometrical model of the zone.

Figure 2 shows an example of a programmed robot path 30 to be followed by a robot. The arrow in the figure illustrates where the robot is positioned on the path at the present time. The path planner unity 9 calculates the future path of the robot by performing an interpolation of a movement instructed by the robot program. The instructed movement is divided into a plurality of small increments and the path planner computes joint angles for all axes of the robot for each increment. The figure illustrates past points $P_{-4}$ - $P_{-1}$ and future points $P_1$ - $P_{10}$ on the path. The path planner has planned the future points $P_1$ - $P_{10}$ in advance based on one or more program instructions in the robot program. In the example shown in figure 2, the path planner has computed joint angles for ten future points. The time between each calculated future point is $\Delta t$. The total time planned in advance by the path planner is called the look-ahead time $t_{la}$ of the path planner.

An example of how the estimation of the time left until a collision occurs is carried out will be described in the following with reference to Figure 3. Figure 3 shows a diagram illustrating the shortest distance $d_{sd}$ between a pair of zones versus time t. The shortest distance between two zones is calculated in real time based on future joint angles from the path planner, a kinematic model of the robot, and geometric models of the protective zones. The configuration of the robot during the look-ahead time of the path planner can be determined based on the kinematic model of the robot and the joint angles from the path planner. When the future configuration of the robot geometric models of the protective zones has been determined, it is possible to calculate positions on surfaces of the protective zones and on the basis thereof determining the distances between the protective zones. An iterative algorithm finds the shortest distance between the surfaces of the zones. The shortest distance between the zones is determined for each point $P_1$-$P_{10}$ from the path planner and is stored in the buffer unit 13. The positions of each pair of protective zones is predicted by calculating the positions of each moving object from a flow of joint angles supplied by at least one control unit for a given time of look ahead.

For example, the path planner calculates joint angles for the robot at ten future points. The buffer function has a time window and only contains a predetermined number of values. In this embodiment, the buffer contains ten distance values for ten consecutive points in the time. The buffer may contain only future points in time $P_1$ - $P_{10}$. However, it is also possible to keep some past values $P_{-4}$ - $P_{-1}$ in the buffer. Figure 3 shows the shortest distance values $d_{sd}$ stored in the buffer plotted as a function of time t. In this example, the shortest distance between the protective zones is decreasing. The stored distance values in the buffer are used to predict the time left until collision. The curve 32 is extrapolated until it intersects with the time axis. By then the distance between the zones is zero. The extrapolation is obtained, for example, by a linear or a 2$^{\text{nd}}$ degree of interpolation curve. The point in time when the distance between the zones is zero is the estimated time left until collision $t_c$. The time left until collision $t_c$ is equal to the sum of the look-ahead time of the path planner $t_{la}$ and the time $t_e$ of extrapolated part of the curve 32.

$$t_c = t_{la} + t_e \qquad (1)$$

In order to avoid unnecessary computational load on the processor, the shortest distances between each zone pair and the time left until collision are only calculated if the distance between the protective zones is smaller than a predefined value $d_h$, also denoted a horizon distance. As long as the distance between the protective zones is larger than the horizon distance, no computation of the time left until collision is made. A conservative approximation of the shortest distances is calculated with trees of bounding boxes around each protective zone. Thus, a horizon distance $d_h$ is defined, below which the shortest distance between each pair of protective zones as well as the time left until collision will be estimated at regular time intervals.

The following data must be known before the program algorithm starts:

- Kinematic models of the robot. These models are used to compute the positions of the robots in real time.
- Possible reference coordinate system and orientation of attached zones. The orientation is needed to calculate the position of a zone relative to the object it is attached to in the reference coordinate system used.
- Initialization parameters, which are set up values to be used by the algorithm for calculating the time left until collision in order to monitor interference between moving objects.

Data that must be communicated in real time to the collision avoidance unit are joint values. These are used as input to the kinematic models of the robots in order to calculate the positions of the components of the robot. The stopping times of the robots have to be calculated as well. These are obtained in real time based on a dynamic model for each robot and information contained in the path planner entity 9. Other data created and used in real time are distance computations stored for each zone pair in a buffer over a give time interval, an extrapolation function between the distances for each pair of zone in the time interval and a root of each of the extrapolation functions.

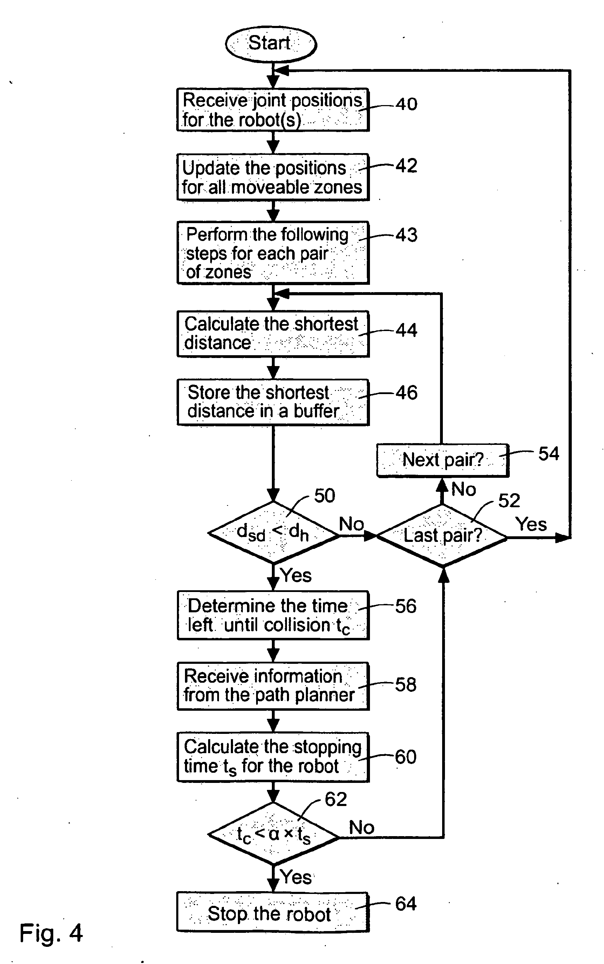

Figure 4 is a flow chart illustration of a method and a computer program product according to an embodiment of the present invention. It shall be understood that each block of the flow chart can be implemented by computer program instructions.

Recently calculated joint angles are continuously received from the path planner unit(s) for all axes of all robots in the work cell, block 40. The positions for all movable zones, i.e. zones enclosing movable parts, are updated, block 42, based on the received joint angles, the kinematic model of the robots, and the geometric models of the zones.

The algorithm described by the steps 44-64 is looped through for each pair of zones, until all pairs of zones have been taken care of, block 43. The shortest distance $d_{sd}$ between each pair of zones, or its approximation, is calculated, block 44, excluding stationary zone pairs. Each calculated shortest distance $d_{sd}$ is stored in a buffer belonging to the pair of zones, block 46. Each buffer already comprises a plurality of shortest distances calculated during previous iterations. The newly calculated distance overwrites the oldest calculated distance in the buffer. The calculated shortest distance $d_{sd}$ for the present pair of zones is compared with the horizon distance $d_h$. If the calculated shortest distance $d_{sd}$ is smaller than the horizon distance $d_h$, the time left until collision tc is determined, block 56, otherwise the next pair of zones is handled, 54. When all zone pairs have been handled, block 52, the entire loop from block 40 is repeated.

The time left until collision tc for the pair of zones is determined based on the shortest distance values stored in the buffer and by means of an extrapolation operation, block 56. Information on axes positions are received from the path planner entity 9, block 58, and based thereon a stopping time $t_s$ for the robot is calculated, block 60. The time left until collision is compared with the stopping time, block 62, and if the time left until collision is smaller than the stopping time multiplied by a parameter denoted a safety factor $\alpha$, the robot or the object or both are ordered to stop, block 64. The safety factor $\alpha$ must be larger than one in order to provide a safety margin. If the time left until collision is larger than the stopping time multiplied by the safety factor $\alpha$, the algorithm is repeated for the next pair of zones. The parameter $\alpha$ is defined such that at least one of the robot control systems shall order the robot to stop their movements if the predicted shortest time until collision is equal to or less than $\alpha$ times the stopping time of one of the robots involved in the impending collision.

$$t_c < \alpha \cdot t_s \qquad (2)$$

In one embodiment of the invention, the robot operator is allowed to set or adjust the value of the safety factor $\alpha$ for each pair of zones. The operator is also allowed to set the safety factor $\alpha$ to a value less than one. In case the safety factor $\alpha$ is set to a value below one, the collision avoidance detection for that pair of zones is turned off. This is, for instance, advantageous if it is known to the operator that the path of the robot is close to, or coincides with, the object, and thus the robot should be allowed to come very close to, or even be in contact with, the object, without running the risk of being stopped by the collision avoidance system.

The calculated shortest distance is compared with a defined minimum value $d_{min}$, and in case the calculated shortest distance $d_{sd}$ is smaller than the minimum value, the speed of the robot is reduced by a given percentage, for example in the order of 20-30% reduction of the speed. Reducing the speed of the robot means that the stop time $t_s$ of the robot is reduced and thereby increasing the allowed time left until collision $t_c$ according to equation 2.

All zone pairs are handled in the same way. The loop, blocks 52-54, continues until all zone pairs have been taken care of. If an imminent collision has been detected, that is if $t_c < \alpha \cdot t_s$, and if any of the zones belongs to a mechanical unit connected to the robot control unit 5, corresponding units are ordered to stop. If any of the zones belongs to an external object, a stop signal can be sent by the collision avoidance unit 11 to an external control unit, like a PLC, to which the said object shall be connected. Thus, which of the moving objects is ordered to stop depends on to which object(s) the pair of zones belongs. If one of the zones belongs to robot 1 and the other zone belongs to robot 2, both robots are ordered to stop. The stop orders are generated from a monitoring task inside the computation unit 13 and propagated throughout the robot controller 5 via the stop unit 10.

If the shortest distance between any of the pair of zones is below a minimum distance $d_{min}$, the speed of the moving objects to which the protective zones are attached and monitored, shall be reduced by given percentage.

From a distance greater than the horizon distance $d_h$, an approximation of the shortest distance between each pair of non-stationary protective zone is calculated. From a distance lower than the horizon distance $d_h$, the shortest distance between each pair of non-stationary protective zones is computed. The obtained distances are recorded in a buffer both for past and future positions at a constant time increment within the time interval set by the robot control unit. The method comprises interpolating the 3 - 10 latest shortest distances recorded within the time interval by a linear or quadratic function. From the extrapolation of the obtained curve, estimate the time left until collision of pairs of objects. Send a command for moving objects to stop on path if the predicted time left until collision is less than $\alpha$ times their respective stopping time. Order an emergency stop for the robots, possibly off the programmed path.

In another embodiment, the predictions of the time left until collision are obtained with very high accuracy below a predefined threshold for the look-ahead time interval, whereas above the threshold they are obtained with lower accuracy. Alternatively, the predictions of the time left until collision are obtained with very high accuracy below a predefined threshold $d_h$ for the shortest distance between the pairs or zones, whereas above the threshold they are obtained with lower accuracy.

The advantages of the present invention are that collisions between protective zones can be anticipated well in advance with a rough approximation, and very accurately within a shorter time of look ahead. This results in true real time collision avoidance, minimizing the risk of overload of the CPU of a robot control unit by utilizing an efficient algorithm possible to run as an external device connected by a bus to the main computer of the control unit of the robot.

The present invention is not limited to the embodiments disclosed but may be varied and modified within the scope of the following claims. For example, instead of calculating the time left until collision as the time until the shortest distance curve intersects the time axis, i.e. the time when the distance between the robot and the object is zero, it is also possible to calculate the time until the distance between the robot and the object is less than a critical distance which is close to zero.

**Claims**

1. A method for avoiding collisions between components of a multi-axial industrial robot and at least one other object, wherein the method comprises

receiving information on a planned path for the robot, calculating the shortest distances between the components of the robot and the object at a plurality of future points in time based on said information on the planned path and

determining a stopping time for the robot, **<u>characterized in</u> that** the method further comprises:

performing an extrapolation of the stored shortest distances, until the distance between the robot and the object becomes zero, and on the basis thereof determining the time left until a collision between the robot and the object, comparing the estimated time left until collision and the stopping time for the robot, and stopping the robot or the object in case the estimated time left until collision is close to the stopping time for the robot.

2. The method according to claim 1, wherein said plurality of future points in time are consecutively selected during a defined look-ahead time interval.

3. The method according to claim 1 or 2, wherein said information on the planned robot path comprises information on future robot joint angles on the planned path.

4. The method according to any of the previous claims, wherein the method comprises:

defining one or more protective zones attached to and enclosing the components of the robot, defining one or more protective zones attached to and enclosing the object, calculating the shortest distances between the zone(s) of the robot and the zone(s) of the object at a plurality of future points in time, and based thereon estimating the time left until a collision occurs between the zones storing the calculated shortest distances in a buffer for each pair of zones, and based thereon estimating the time left until a collision occurs between the zones.

5. The method according to any of the previous claims, wherein the method comprises:

defining at least two protective zones attached to and enclosing the components of the robot, calculating the shortest distance between the zones of the robot at a plurality of future points in time, and based thereon estimating the time left until a collision occurs between the components of the robot.

6. The method according to any of the previous claims, wherein said other object is a multi-axial industrial robot and the method comprises:

defining at least two protective zones attached to and enclosing the components of the first robot,
defining at least two protective zones attached to and enclosing the components of the second robot,
forming pairs of zones consisting of one zone of the first robot and one zone of the second robot,
calculating, for each pair of zones, the shortest distance between the zones at a plurality of future points in time, and
storing the calculated shortest distances in a buffer for each pair of zones, and based thereon estimating the time left until a collision occurs between the zones.

7. The method according to any of the previous claims, wherein the method further comprises calculating a shortest distance between the components of the robot and the object, determining whether the calculated shortest distance is smaller than a threshold value and in case the shortest distance is smaller than the threshold value the time left until collision is estimated, otherwise no estimation of the time left until collision is done.

8. The method according to any of the previous claims, wherein the robot or the object is ordered to stop in case the estimated time left until collision is shorter than the stopping time multiplied by a safety factor set by the user.

9. The method according to any of the previous claims, wherein the method further comprises calculating a shortest distance between the components of the robot and the object, determining whether the calculated shortest distance is smaller than a defined minimum value and in case the shortest distance is smaller than the minimum value reducing the speed of the robot by a given percentage.

10. A computer program product directly loadable into the internal memory of a computer, comprising software for performing the steps of any of the claims 1-9

11. A computer readable medium, having a program recorded thereon, where the program is to make a computer perform the steps of any of the claims 1-9, when said program is run on the computer.

12. A device for avoiding collisions between components of a multi-axial industrial robot (1,2) and at least one other object (1-3), wherein the device comprises a computation unit (13) adapted to receive information on a planned path for the robot, to calculate the shortest distances between the components of the robot and the object at a plurality of future points in time based on said information on the planned path and to compute a stopping time for the robot, **characterized in that** said computation unit (13) further is adapted to perform an extrapolation of the stored shortest distances until the distance between the robot and the object becomes zero, and on the basis thereof determining the time left until a collision between the robot and the object, to compare the estimated time left until collision and the stopping time for the robot, and to generate an order to stop the robot or the object in case the estimated time left until collision is close to the stopping time for the robot.

13. The device according to claim 12, wherein the device comprises a memory (16) for storing data rendered by defining protective zones attached to and enclosing components of the robot and the object, and said computation unit is adapted to calculate the shortest distance between the zone(s) of the robot and the zone(s) of the object at a plurality of future points in time, and based thereon estimating the time left until a collision occurs between the zones.

14. The device according to claim 13, wherein said memory (16) is adapted to store two or more protective zones enclosing components of the robot, and said computation unit is adapted to calculate the shortest distance between the zones of the robot at a plurality of future points in time, and based thereon estimating the time left until a collision occurs between the components of the robot.

15. The device according to any of claims 12 - 14, wherein said computation unit (13) is adapted to calculate a shortest distance between the components of the robot and the object, determining whether the calculated shortest distance is smaller than a threshold value and in case the shortest distance is smaller than the threshold value the time left until collision is estimated, otherwise no estimation of the time left until collision is done.

16. The device according to any of claims 12 - 15, wherein said computation unit (13) is adapted to calculate a shortest distance between the components of the robot and the object, to determine whether the calculated shortest distance is.smaller than a minimum value and in case the shortest distance is smaller than the minimum value reducing the speed of the robot by a given percentage.

17. The device according to any of claims 12 - 16, wherein the robot or the object is stopped in case the estimated time left until collision is shorter than the stopping time multiplied by a safety factor set by the user.

**18.** Use of the method according to any of the claims 1-9 and the device according to any of claims 12-17 for avoiding collisions between robots in a multi robot system.

**Patentansprüche**

**1.** Verfahren zum Vermeiden von Kollisionen zwischen Bauteilen eines multiaxialen Industrieroboters und wenigstens einem anderen Objekt, wobei das Verfahren umfasst ein Empfangen von Information über einen für den Roboter geplanten Weg, ein Berechnen der kürzesten Entfernungen zwischen den Bauteilen des Roboters und dem Objekt an einer Mehrzahl zukünftiger Zeitpunkte basierend auf dieser Information über den geplanten Weg, und ein Bestimmen einer Stoppzeit für den Roboter **dadurch gekennzeichnet, dass** das Verfahren ferner umfasst:

ein Durchführen einer Extrapolation der gespeicherten kürzesten Entfernungen, bis die Entfernung zwischen dem Roboter und dem Objekt Null wird, und auf deren Grundlage ein Bestimmen der Zeit, die bis zu einer Kollision zwischen dem Roboter und dem Objekt verbleibt, ein Vergleichen der veranschlagten, bis zu einer Kollision verbleibenden Zeit mit der Stoppzeit für den Roboter, und ein Stoppen des Roboters oder des Objekts in dem Falle, in dem die veranschlagte, bis zur Kollision verbleibende Zeit nahe der Stoppzeit des Roboters liegt.

**2.** Verfahren nach Anspruch 1, in welchem die Mehrzahl von zukünftigen Zeitpunkten fortlaufend während eines definierten, vorausschauenden Zeitintervalls ausgewählt wird.

**3.** Verfahren nach Anspruch 1 oder 2, in welchem die Information auf dem geplanten Roboterweg Information über zukünftige Achswinkel des Roboters auf dem geplanten Weg umfasst.

**4.** Verfahren nach einem der vorhergehenden Ansprüche, in welchem das Verfahren umfasst:

ein Definieren ein oder mehrerer Schutzzonen, die an den Bauteilen des Roboters angefügt werden und diese umgeben, ein Definieren ein oder mehrerer Schutzzonen, die an dem Objekt angefügt werden und dieses umgeben, ein Berechnen der kürzesten Entfernungen zwischen der/den Zone(n) des Roboters und der/den Zone(n) des Objekts an einer Mehrzahl von zukünftigen Zeitpunkten und basierend darauf ein Veranschlagen der Zeit, die verbleibt, bis eine Kollision zwischen den Zonen auftritt, ein Speichern der berechneten kürzesten Entfernungen in einem Puffer für jedes Paar von Zonen, und basierend darauf ein Veranschlagen der Zeit, die verbleibt, bis eine Kollision zwischen den Zonen auftritt.

**5.** Verfahren nach einem der vorhergehenden Ansprüche, in welchem das Verfahren umfasst:

ein Definieren wenigstens zweier Schutzzonen, die an die Bauteile des Roboters angefügt werden und diese umgeben, ein Berechnen der kürzesten Entfernung zwischen den Zonen des Roboters an einer Mehrzahl von zukünftigen Zeitpunkten, und basierend darauf ein Veranschlagen der Zeit, die verbleibt, bis eine Kollision zwischen den Bauteilen des Roboters auftritt.

**6.** Verfahren nach einem der vorhergehenden Ansprüche, in welchem das andere Objekt ein multiaxialer Industrieroboter ist und das Verfahren umfasst:

ein Definieren von wenigstens zwei Schutzzonen, die an die Bauteile des ersten Roboters angefügt werden und diese umgeben, ein Definieren von wenigstens zwei Schutzzonen, die an die Bauteile des zweiten Roboters angefügt werden und diese umgeben, ein Bilden von Zonenpaaren, bestehend aus einer Zone des ersten Roboters und einer Zone des zweiten Roboters, ein Berechnen für jedes Zonenpaar der kürzesten Entfernung zwischen den Zonen an einer Mehrzahl von zukünftigen Zeitpunkten, und ein Speichern der berechneten kürzesten Entfernungen in einem Puffer für jedes Zonenpaar, und basierend darauf ein Veranschlagen der Zeit, die verbleibt, bis eine Kollision zwischen den Zonen auftritt.

**7.** Verfahren nach einem der vorhergehenden Ansprüche, in welchem das Verfahren ferner umfasst ein Berechnen einer kürzesten Entfernung zwischen den Bauteilen des Roboters und des Objekts, ein Bestimmen, ob die berechnete kürzeste Entfernung kleiner ist als ein Schwellenwert, und in dem Falle, in welchem die kürzeste Entfernung kleiner ist als der Schwellenwert, die Zeit bis zu einer Kollision abgeschätzt wird, andernfalls wird keine Schätzung der bis zu einer Kollision verbleibenden Zeit durchgeführt.

**8.** Verfahren nach einem der vorhergehenden Ansprüche, in welchem der Roboter oder das Objekt geordert wird anzuhalten, in dem Falle, dass die veranschlagte Zeit, die bis zu einer Kollision verbleibt, kürzer ist als die Stoppzeit, multipliziert mit einem durch den Benutzer eingestellten Sicherheitsfaktor.

9. Verfahren nach einem der vorhergehenden Ansprüche, in welchem das Verfahren ferner umfasst ein Berechnen einer kürzesten Entfernung zwischen den Bauteilen des Roboters und des Objekts, ein Bestimmen, ob die berechnete kürzeste Entfernung kleiner ist als ein definierter Minimalwert, und in dem Falle, in welchen die kürzeste Entfernung kleiner ist als der Minimalwert, ein Verringern der Geschwindigkeit des Roboters um einen gegebenen Prozentsatz.

10. Computerprogramm-Produkt, das direkt in den internen Speicher eines Computers geladen werden kann, mit einer Software zum Durchführen der Schritte eines der Ansprüche 1 bis 9.

11. Computer lesbares Medium mit einem darauf aufgezeichneten Programm, wobei das Programm bewirkt, dass ein Computer die Schritte eines der Ansprüche 1 bis 9 durchführt, wenn das Programm auf dem Computer läuft.

12. Vorrichtung zum Vermeiden von Kollisionen zwischen Bauteilen eines multiaxialen Industrieroboters (1, 2) und wenigstens eines anderen Objekts (1 bis 3), in welcher die Vorrichtung eine Recheneinheit (13) umfasst, die so ausgebildet ist, dass diese Information über einen geplanten Weg für den Roboter empfängt, um die kürzesten Entfernungen zwischen den Bauteilen des Roboters und dem Objekt an einer Mehrzahl von zukünftigen Zeitpunkten basierend auf dieser Information über den geplanten Weg zu berechnen und um eine Stoppzeit für den Roboter zu errechnen, **dadurch gekennzeichnet, dass** die Recheneinheit (13) ferner so ausgebildet ist, dass diese eine Extrapolation der gespeicherten kürzesten Entfernungen durchführt, bis die Entfernung zwischen dem Roboter und dem Objekt null wird, und auf deren Grundlage die Zeit bestimmt, die bis zu einer Kollision zwischen dem Roboter und dem Objekt verbleibt, um die veranschlagte, bis zur Kollision verbleibende Zeit mit der Stoppzeit für den Roboter zu vergleichen und um einen Befehl zu erzeugen, um den Roboter oder das Objekt in dem Falle zu stoppen, in welchem die veranschlagte, bis zur Kollision verbleibende Zeit nahe der Stoppzeit für den Roboter liegt.

13. Vorrichtung nach Anspruch 12, in welcher die Vorrichtung einen Speicher (16) zum Speichern von Daten umfasst, die erbracht werden, indem Schutzzonen definiert werden, die an Bauteilen des Roboters und des Objekts angefügt sind und diese umschließen, und wobei die Recheneinheit so ausgebildet ist, dass diese die kürzeste Entfernung zwischen der/den Zone(n) des Roboters und der/den Zone(n) des Objekts an einer Mehrzahl von zukünftigen Zeitpunkten berechnet und basierend darauf die Zeit veranschlagt, die verbleibt, bis eine Kollision zwischen den Zonen auftritt.

14. Vorrichtung nach Anspruch 13, in welcher der Speicher (16) so ausgebildet ist, dass dieser zwei oder mehr Schutzzonen speichert, die Bauteile des Roboters umschließen, und die Recheneinheit so ausgebildet ist, dass diese die kürzeste Entfernung zwischen den Zonen des Roboters an einer Mehrzahl von zukünftigen Zeitpunkten berechnet und basierend darauf die Zeit veranschlagt, die verbleibt, bis eine Kollision zwischen den Bauteilen des Roboters auftritt.

15. Vorrichtung nach einem der Ansprüche 12 bis 14, in welcher die Recheneinheit (13) so ausgebildet ist, dass diese eine kürzeste Entfernung zwischen den Bauteilen des Roboters und des Objekts berechnet, bestimmt, ob die berechnete kürzeste Entfernung kleiner ist als ein Schwellenwert, und in dem Falle, dass die kürzeste Entfernung kleiner ist als der Schwellenwert, die Zeit veranschlagt, die bis zu einer Kollision verbleibt, wobei andernfalls keine Abschätzung der bis zu einer Kollision verbleibenden Zeit durchgeführt wird.

16. Vorrichtung nach einem der Ansprüche 12 bis 15, in welcher die Recheneinheit (13) so ausgebildet ist, dass diese eine kürzeste Entfernung zwischen den Bauteilen des Roboters und des Objekts berechnet, um zu bestimmen, ob die berechnete kürzeste Entfernung kleiner ist als ein Minimalwert, und in dem Falle, in welchem die kürzeste Entfernung kleiner ist als der Minimalwert, die Geschwindigkeit des Roboters um einen gegebenen Prozentsatz verringert wird.

17. Vorrichtung nach einem der Ansprüche 12 bis 16, in welcher der Roboter oder das Objekt in dem Falle gestoppt wird, in welchem die veranschlagte Zeit, die bis zu einer Kollision verbleibt, kürzer ist als die Stoppzeit, multipliziert mit einem durch den Benutzer eingestellten Sicherheitsfaktor.

18. Verwendung des Verfahrens nach einem der Ansprüche 1 bis 9 und der Vorrichtung nach einem der Ansprüche 12 bis 17 zum Vermeiden von Kollisionen zwischen Robotern in einem Multi-Robotersystem.

**Revendications**

1. Procédé pour éviter les collisions entre des composants d'un robot industriel multiaxial et au moins un autre objet, lequel procédé comprend les étapes consistant à :

> recevoir des informations relatives à une trajectoire destinée à être suivie par le robot,
> calculer les distances les plus courtes entre les composants du robot et l'objet au cours d'une pluralité d'instants à venir sur la base desdites informations relatives à la trajectoire destinée à être suivie, et
> déterminer une durée nécessaire à l'arrêt du robot,

**caractérisé en ce que** le procédé comprend en outre les étapes consistant à :

> mettre en oeuvre une extrapolation des distances les plus courtes mémorisées, jusqu'à ce que la distance entre le robot et l'objet devienne nulle, et, sur la base de celle-ci, déterminer le temps restant jusqu'à une collision entre le robot et l'objet,
> comparer le temps restant estimé avant collision et la durée nécessaire à l'arrêt du robot, et
> stopper le robot ou l'objet dans le cas où le temps restant estimé avant collision est proche de la durée nécessaire à l'arrêt du robot.

2. Procédé selon la revendication 1, dans lequel ladite pluralité d'instants à venir est choisie de manière successive pendant un intervalle de temps d'anticipation défini.

3. Procédé selon la revendication 1 ou la revendication 2, dans lequel lesdites informations relatives à la trajectoire destinée à être suivie comprennent des informations sur de futurs angles d'articulation du robot sur la trajectoire destinée à être suivie.

4. Procédé selon l'une quelconque des revendications précédentes, comprenant les étapes consistant à :

> définir une ou plusieurs zones de protection reliées aux composants du robot et englobant ceux-ci,
> définir une ou plusieurs zones de protection reliées à l'objet et englobant celui-ci,
> calculer les distances les plus courtes entre la ou les zones du robot et la ou les zones de l'objet au cours d'une pluralité d'instants à venir, et, sur la base de celles-ci, estimer le temps restant avant qu'une collision se produise entre les zones,
> mémoriser les distances les plus courtes calculées dans une mémoire tampon pour chaque paire de zones, et, sur la base de celles-ci, estimer le temps restant avant qu'une collision se produise entre les zones.

5. Procédé selon l'une quelconque des revendications précédentes, comprenant les étapes de consistant à :

> définir au moins deux zones de protection reliées aux composants du robot et englobant ceux-ci,
> calculer la distance la plus courte entre les zones du robot au cours d'une pluralité d'instants à venir, et, sur la base de celle-ci, estimer le temps restant avant qu'une collision se produise entre les composants du robot.

6. Procédé selon l'une quelconque des revendications précédentes, dans lequel ledit autre objet est un robot industriel multiaxial et dans lequel le procédé comprend les étapes consistant à :

> définir au moins deux zones de protection reliées aux composants du premier robot et englobant ceux-ci,
> définir au moins deux zones de protection reliées aux composants du deuxième robot et englobant ceux-ci,
> former des paires de zones composées d'une zone du premier robot et d'une zone du deuxième robot,
> calculer, pour chaque paire de zones, la distance la plus courte entre les zones au cours d'une pluralité d'instants à venir, et
> mémoriser les distances les plus courtes calculées dans une mémoire tampon pour chaque paire de zones, et, sur la base de celles-ci, estimer le temps restant avant collision entre les zones.

7. Procédé selon l'une quelconque des revendications précédentes, comprenant en outre les étapes consistant à calculer la distance la plus courte entre les composants du robot et l'objet, à déterminer si la distance la plus courte calculée est plus petite qu'une valeur seuil et, dans le cas où la distance la plus courte est plus petite que la valeur seuil, à estimer le temps restant avant une collision, sinon à ne réaliser aucune estimation du temps restant avant collision.

8. Procédé selon l'une quelconque des revendications précédentes, dans lequel le robot ou l'objet est commandé pour s'arrêter dans le cas où le temps restant estimé avant une collision est plus court que la durée d'arrêt multiplié par un facteur de sécurité défini par l'utilisateur.

9. Procédé selon l'une quelconque des revendications précédentes, dans lequel le procédé comprend en outre les étapes consistant à calculer la distance la plus courte entre les composants du robot et l'objet, à déterminer si la distance la plus courte calculée est plus petite qu'une valeur minimum définie, et, dans le cas où la distance la plus courte est plus petite que la valeur minimum, à réduire la vitesse du robot d'un pourcentage donné.

10. Produit incluant un programme d'ordinateur apte à être directement chargé dans la mémoire interne d'un ordinateur, comprenant un logiciel pour la mise en oeuvre des étapes de l'une quelconque des revendications 1 à 9.

11. Support lisible par un ordinateur, comprenant un programme enregistré sur celui-ci, ce programme étant destiné à mettre en oeuvre les étapes de l'une quelconque des revendications 1 à 9 par un ordinateur, lorsque ledit programme est exécuté sur l'ordinateur.

12. Dispositif pour éviter les collisions entre des composants d'un robot industriel multiaxial (1, 2) et au moins un autre objet (1-3), comprenant une unité de calcul adaptée pour recevoir des informations relatives à une trajectoire destinée à être suivie par le robot, pour calculer les distances les plus courtes entre les composants d'un robot et l'objet au cours d'une pluralité d'instants à venir sur la base desdites informations relatives à la trajectoire destinée à être suivie, et pour calculer une durée nécessaire à l'arrêt du robot, **caractérisé en ce que** ladite unité de calcul (13) est en outre adaptée pour mettre en oeuvre une extrapolation des distances les plus courtes mémorisées jusqu'à ce que la distance entre le robot et l'objet devienne nulle, et, sur base de celles-ci, déterminer le temps restant avant une collision entre le robot et l'objet, pour comparer le temps restant estimé avant collision et la durée nécessaire à l'arrêt du robot, et pour générer un ordre d'arrêter du robot ou l'objet dans le cas où le temps restant estimé avant collision est proche de la durée nécessaire à l'arrêt du robot.

13. Dispositif selon la revendication 12, comprenant une mémoire (16) pour mémoriser des données restituées en définissant des zones de protection reliées aux composants du robot et de l'objet et englobant ceux-ci, et ladite unité de calcul est adaptée pour calculer la distance la plus courte entre la ou les zones du robot et la ou les zones de l'objet au cours d'une pluralité d'instants à venir, et, sur la base de celle-ci, pour estimer le temps restant avant qu'une collision se produise entre les zones.

14. Dispositif selon la revendication 13, dans lequel ladite mémoire (16) est adaptée pour mémoriser deux zones de protection ou plus, englobant les composants du robot, et ladite unité de calcul est adaptée pour calculer la distance la plus courte entre les zones du robot au cours d'une pluralité d'instants à venir, et, sur la base de celle-ci, pour estimer le temps restant avant qu'une collision se produise entre les composants du robot.

15. Dispositif selon l'une quelconque des revendications 12 à 14, dans lequel ladite unité de calcul (13) est adaptée pour calculer la distance la plus courte entre les composants du robot et l'objet, pour déterminer si la distance la plus courte calculée est plus petite qu'une valeur seuil et, dans le cas où la distance la plus courte est plus petite que la valeur seuil, pour estimer le temps restant avant collision ; sinon aucune estimation du temps restant avant collision n'est réalisée.

16. Dispositif selon l'une quelconque des revendications 12 à 15, dans lequel ladite unité de calcul (13) est adaptée pour calculer la distance la plus courte entre les composants du robot et l'objet, pour déterminer si la distance la plus courte calculée est plus petite qu'une valeur minimum et, dans le cas où la distance la plus courte est plus petite que la valeur minimum, pour réduire la vitesse du robot d'un pourcentage donné.

17. Dispositif selon l'une quelconque des revendications 12 à 16, dans lequel le robot ou l'objet est stoppé dans le cas où le temps restant estimé avant une collision est plus court que la durée d'arrêt multipliée par un facteur de sécurité défini par l'utilisateur.

18. Utilisation du procédé selon l'une quelconque des revendications 1 à 9 et du dispositif selon l'une quelconque des revendications 12 à 17 pour éviter les collisions entre les robots dans un système multi robot.

Fig. 1

Fig. 2

Fig. 3

Start

Receive joint positions for the robot(s) —40

Update the positions for all moveable zones —42

Perform the following steps for each pair of zones —43

Calculate the shortest distance —44

Store the shortest distance in a buffer —46

Next pair? —54

$d_{sd} < d_h$ —50

No → Last pair? —52 → Yes

Yes

Determine the time left until collision $t_c$ —56

Receive information from the path planner —58

Calculate the stopping time $t_s$ for the robot —60

$t_c < \alpha \times t_s$ —62

No

Yes

Stop the robot —64

Fig. 4

15

**EP 1 901 150 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6212444 B
- US 20050090930 A
- JP 2003334777 A
- JP 8141978 A
- US 6678582 B